# EUROPEAN PATENT SPECIFICATION

(11) **EP 3 243 677 B1**
(45) Date of publication and mention of the grant of the patent: **28.11.2018**
(21) Application number: 17170948.8
(22) Date of filing: 12.05.2017
(51) Int. Cl.: B60H 1/00, F16N 7/32, F16N 19/00, B65D 51/30

(54) **OIL REFILL CONTAINER**
ZUFÜHRUNGSBEHÄLTNIS FÜR ÖL
RÉCIPIENT DE DISTRIBUTION DE LUBRIFIANT

(30) Priority: 13.05.2016 IT UA20163434
(43) Date of publication of application: 15.11.2017
(73) Proprietor: Mahle Aftermarket Italy S.p.A., 43126 Parma (IT)
(72) Inventor: CANTADORI, Andrea, 43126 PARMA (IT)
(74) Representative: Dondi, Silvia

(56) References cited:
- EP-A1- 2 199 710
- WO-A1-2011/041874
- US-A- 5 813 564

## Description

### SCOPE OF THE INVENTION

The present invention relates to the field of coolant refill systems in air conditioning and/or climate control systems for motor vehicles.

In particular, the present invention relates to the operation of introducing lubricating oil into the cooling circuit of the air conditioner system and adapted to maintain the various devices or components of said cooling circuit lubricated.

The introduction of oil is an operation that normally precedes the coolant refill operation.

### PRIOR ART

It is known that lubricating oils used in this field are characterized by a high hygroscopicity; it follows that at each oil suction from the respective refill container/tank present in the refill station, the remaining oil inside the tank itself can absorb, and on an average this happens, a certain amount of humidity from the air which replaces the oil ejected and that is then present in the remaining volume inside the container or tank.

The presence of humidity in the lubrication oil damages the subsequent refills of the vehicle cooling circuits; in fact, the particles/traces of water entering into the system may react chemically (under conditions of high temperature and pressure) with the coolant, thereby creating harmful and corrosive acids for the circuit.

An example of a container containing lubricant for use in a refill system for an air conditioning system is described in WO2011/041874.

### DESCRIPTION AND ADVANTAGES OF THE INVENTION

An object of the present invention is to provide an oil refill container comprising a dehydrating cap having the function of allowing the lubricant oil refill while preserving the quality thereof over time, with a simple, rational and cost-effective solution.

A further object is to provide an oil refill container containing drying material which can be associated in a quick and simple manner to a coolant refill station in an air conditioning system for motor vehicles. These and other objects are achieved with the features of the invention described in the independent claim 1. The dependent claims describe preferred and/or particularly advantageous aspects of the invention.

An embodiment of the present invention provides an oil container, comprising a body, also called bottle, which can be sealed hermetically with a closing cap, wherein the closing cap comprises a cover structured so as to cooperate with an under-cap in turn adapted to contain drying substances or means, that is to say, adapted to limit the contamination of the oil by the humidity of the air.

In other words, the closing cap comprises a cover and an under-cap. Preferably, the under-cap is coupled to the cover in a position below it.

According to one aspect of the invention, the closing cap is provided with quick coupling means arranged to be connected to the refill station.

Preferably, the quick coupling means are in fluid communication with the containment compartment of the container body.

Preferably, the quick coupling means comprise a tubular connector arranged to be connected to the refill station, the tubular connector being integral with the cover or being adapted to be removably connected to the cover seat.

The under-cap is adapted to define a compartment suitable for containing at least an amount of a drying substance when it is coupled with said cover. In other words, the under-cap is shaped in such a way as to delimit, with the cover, a compartment suitable for containing at least an amount of a drying substance.

The provision of retaining the drying substance by means of the under-cap allows optimizing the space available inside the container body. Moreover, unlike the container described in WO2011/041874, the container according to the invention does not require replacement of a part thereof for its connection to a refill station.

In more detail, the term drying means the chemical-physical process by which water vapor is extracted from the air in an adsorption operation, and where the water vapor molecules bind to the surface of said material, which in a preferred aspect is silica gel or colloidal silica, formally (SiO2)n, a silicon dioxide polymer.

According to one aspect of the invention, the body cooperates in closure with the under-cap and the latter with the cover itself.

Preferably, the hermetic seal between the cover and the under-cap and body takes place by means of sealing rings, such as O-rings, made of plastics and created with the under-cap geometry.

More in general, the container may comprise sealing elements created with the geometry of the under-cap and placed in such a way that a tight seal is created between cover, under-cap and body.

Furthermore, a further O-ring, better described hereinafter and made, for example, of neoprene, is intended to brake the cover by packing it with the under-cap so as to facilitate the unscrewing of the cap with the under-cap, i.e. the closing cap, for filling the body itself.

In other words, the closing cap comprises a sealing ring external to the under-cap, said sealing ring being placed between the cover and the under-cap and being configured to restrain the cover and under-cap assembly by friction with such elements.

According to one aspect of the invention, the assembly formed by "body, cap, and under-cap" when assembled can be associated to the air conditioning station, i.e. to the refill station, via the quick coupling means, also known as quick coupling. Said quick coupling is also connected with at least one oil suction means.

According to one aspect of the invention, the container comprises oil suction means. Preferably, the oil suction means are associated with the closing cap, more preferably the cover, and in fluid communication with the quick coupling means.

According to one aspect of the invention, the under-cap has an opening adapted to receive the suction means.

According to one aspect of the invention, the oil suction means are shaped as a tubular element extending axially from the closing cap, preferably from the cover, to the inside of the containment compartment of the container body.

According to one aspect of the invention, the tubular element forming the suction means is coaxial and in fluid communication with the tubular connector of the quick coupling means.

Preferably, the cover comprises a sleeve adapted to firmly engage the tubular element forming the suction means.

Further sealing systems may be associated with said quick coupling and/or suction means, so as to prevent the passage of air between said cover and said suction means. According to a further aspect of the invention, said under-cap is a container element or enclosure of rigid material, containing therein the air humidity absorbent material, preferably said adsorbent material is housed within a relative compartment.

According to a further aspect of the invention, the quick coupling means are provided with a sealed check valve which preserves the oil inside the container body. Preferably, the cover, associated with the under-cap, is provided with at least one a sealed check valve which preserves the oil inside the container body. The sealed check valve opens only when the body is connected to the system to be refilled and the suction step has started. In other words, the sealed check valve allows the passage of the air only to the inside of the body, replacing the ejected oil, when the container body and the system to be refilled are integrally associated as said above.

According to a further aspect of the invention, the under-cap comprises one or more through holes formed towards the interior of the body (in assembled configuration). These holes allow the passage in both directions of the internal air, which can thus be dried by the substance contained in the under-cap.

In a first embodiment, the under-cap is partly associated with the body by means of a first threaded portion and partly to the cover by means of a second threaded portion.

In a further embodiment, not shown, said under-cap is associable with the cover of the container, but now said cover is directly screwable on a corresponding thread of the body containing the oil.

In essence, the under-cap is a containment body, an accessory, which can be inserted between said container body and the respective cover, containing a compartment for housing the air drying means inside the bottle.

Preferably, said drying means are contained in silica gel bags or enclosures.

Said objects and advantages are all achieved by the oil refill container object of the present invention, which is characterized by the following claims.

### BRIEF DESCRIPTION OF THE FIGURES

This and other features will become more apparent from the following description of some of the configurations, illustrated purely by way of example in the accompanying drawings.
- Figure 1 shows a perspective view of the container with closing cap according to the invention,

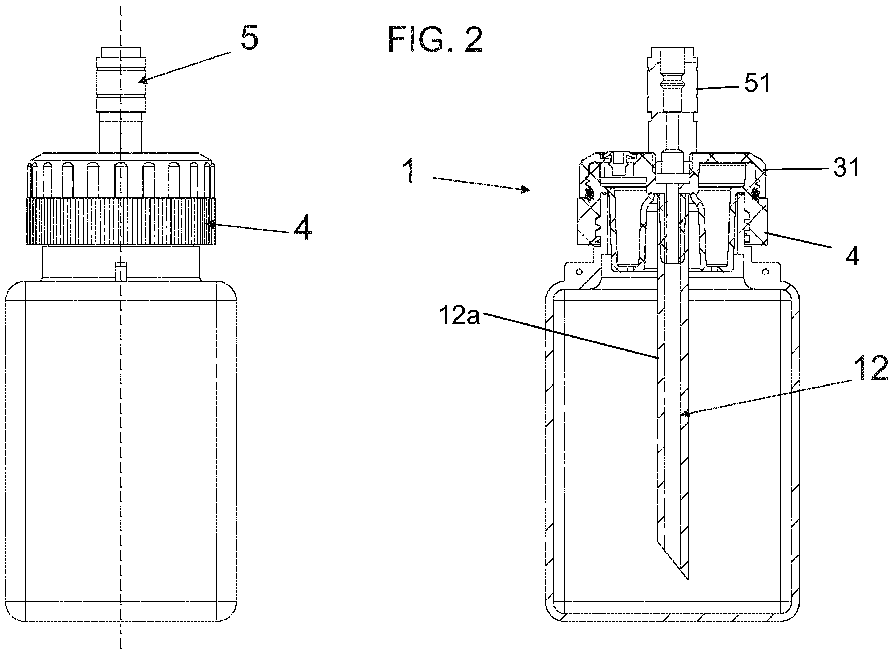

- Figure 2: shows the container and a median section thereof,
- Figure 3 shows the detail of the cover and under-cap of said container,

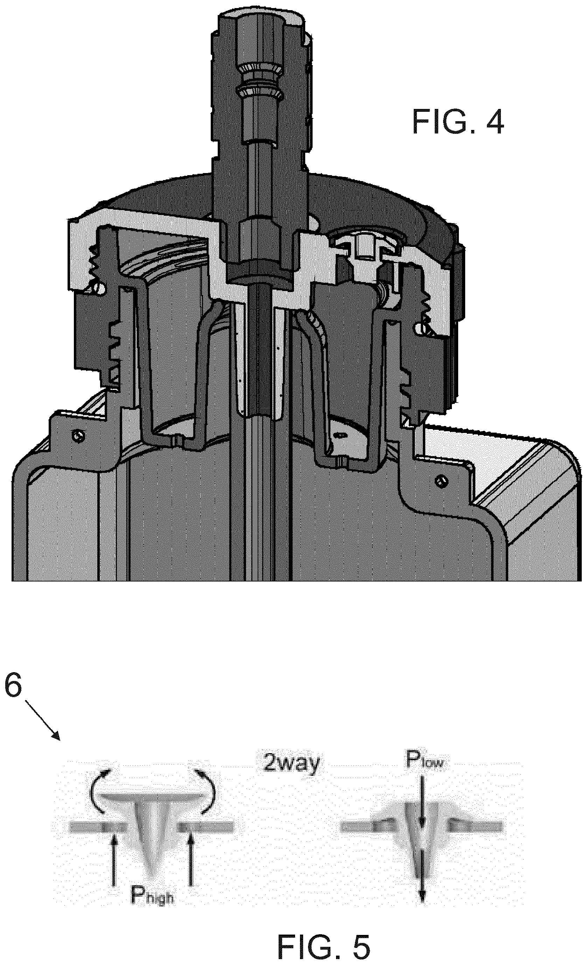

- Figure 4: shows a median and perspective section of the assembly formed by the container body and the closing cap,
- Figure 5: shows the operation of a valve associated with the closing cap to allow the air intake during the oil suction step.

### DESCRIPTION OF THE INVENTION

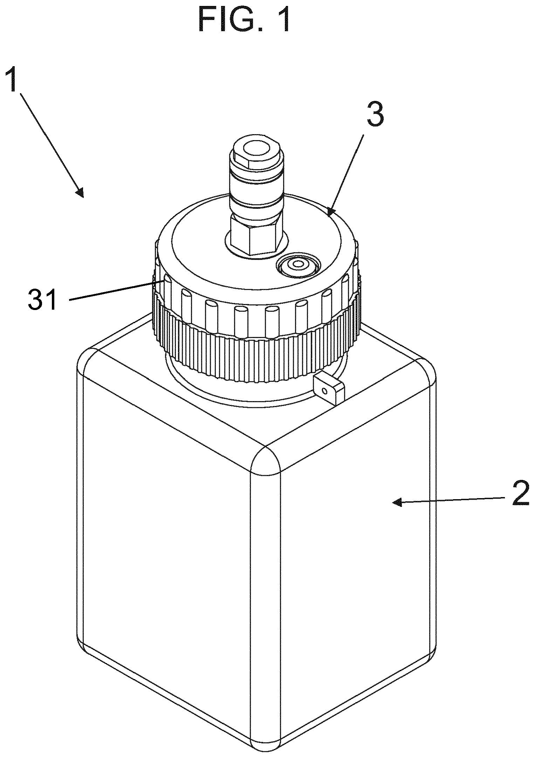

With particular reference to figure 1, reference numeral 1 indicates as a whole an oil refill container object of the present invention.

Container 1 can be coupled to a coolant refill station (not shown) in an air conditioning system for motor vehicles.

Container 1 comprises an oil containment body 2 for the containment of oil adapted to be mixed with the coolant circulating in said air conditioning system and a closing cap 3 for closing body 2, preferably by screwing.

Quick coupling means 5 are associated, axially arranged, with said closing cap 3, and oil suction means 12 is associated, inside body 2, with said closing cap 3; in particular, the quick coupling means are configured for the connection with said refill station.

With reference to the figures, the quick coupling means 5 comprise a tubular connector 51 adapted to be connected to the refill station. The oil suction means 12 are made in the shape of a tubular element 12a extending axially from cover 31 up to within the containment compartment. It should be noted that the tubular element 12a is coaxial and in fluid communication with the tubular connector 51.

The closing cap 3 comprises a cover 31. Between said body 2 and cover 31 there is a rigid enclosure. Preferably, said rigid enclosure is located below the cover and is defined as under-cap 4.

In other words, the closing cap 3 comprises cover 31 and the under-cap 4 coupled to cover 31 in a position below it.

Once cover 31 is associated with under-cap 4, due the conformation of said enclosure (which protrudes towards the container body 2 once assembled), as an inner compartment 7 is defined which can accommodate at least one drying substance or material.

The under-cap 4 is therefore shaped in such a way as to define, with cover 31, a compartment 7 suitable for containing at least an amount of a drying substance.

The function of the drying material is to dry the air inside body 2, which replaces the ejected oil (suctioned by the refill station connected thereto) and which is present in the remaining inner volume of container 1.

In order to allow the air intake, one or more valves 6 are provided, arranged and configured to allow the air passage inside the container, in replacement of the ejected oil. Said one or more valves 6 are arranged in the closing cap, outer portion, in assembled configuration of the container.

As said, when vacuum is made in the system, the oil is suctioned through the quick coupling means 5, also known as quick coupling: at this moment, by differential pressure, valve 6 opens, allowing air to enter and let the oil go out.

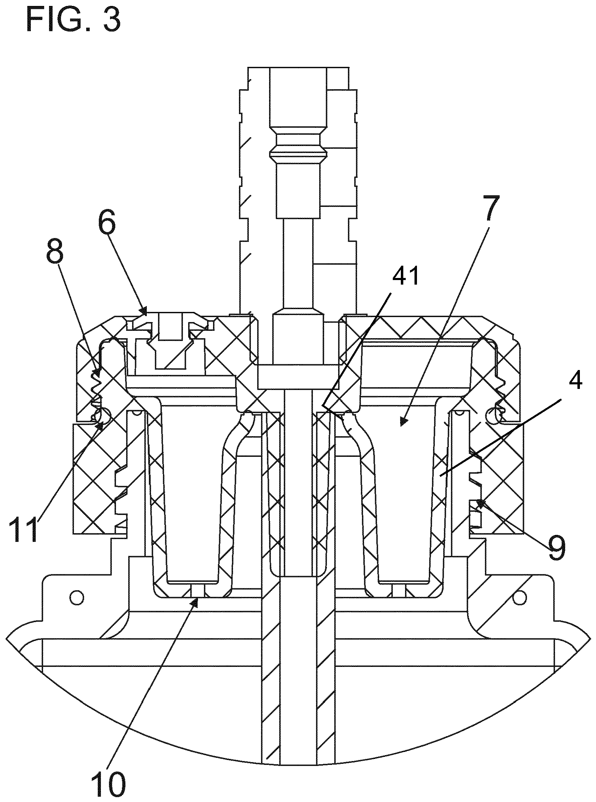

The air passing through compartment 7 containing the drying substance is dehydrated to preserve the oil. The air replaces the oil by means of suitable passage holes 10 and allows the rising of the oil itself through the suction means 12, also known as draft. Said holes 10 are preferably arranged in the under-cap, as shown in figure 3, on the body side, in a configuration of container coupled to the closing cap 3.

With reference to the suction means 12, they are provided with air sealing means or systems, precisely on cover 31, on the side facing towards the refill station.

Container 1 is adapted to be filled with 250 cc of oil suitable for the specific system that is being refilled (PAG or POE).

According to the foregoing, container 1 can be hermetically closed and/or sealed by means of the aforementioned cover 31 and under-cap 4 containing a drying material, preferably contained in a breathable bag or enclosure; preferably, said drying material is silica-gel.

The hermetic seal between cover 31, under-cap 4 and container 2 is obtained by means of O-rings having the geometry of the under-cap 4.

It should be noticed the presence of a sealing 11, outer O-ring. Preferably, said sealing ring is of neoprene. With this solution, the sealing ring brakes cover 31 by packing it with the under-cap 4 so as to facilitate the loosening of the assembly formed by cover 31 and the relative under-cap 4 for filling body 2 of container 1.

The quick coupling is provided with a sealed check valve which preserves the oil the bottle, the sealed check valve opens only when the body is connected to the system to be filled.

In the event of malfunction or in any case, in the event that a higher pressure than the ambient one is created inside body 2, the sealed check valve is configured to open thereby allowing the pressure rebalancing inside the bottle itself.

Said under-cap 4 has an opening 41 adapted to receive said suction means 12.

With reference to the figures, the tubular element 12a is axially extended from cover 31 up to the inside of the containment compartment through opening 41.

Said under-cap 4 is directly associable to cover 31 and said cover 31 is directly screwable on the corresponding thread of body 2 containing the oil. Alternatively, said under-cap 4 is associable to both body 2 of container 1, by at least a first threaded portion 9, and to cover 31, by a second threaded portion 8.

It is clear that several changes and/or additions of parts may be made to the transfer apparatus and relevant method described herein without departing from the scope of the present invention being defined by the following claims.

It is also clear that while the present invention has been described with reference to some specific examples, a man skilled in the art can certainly implement many other equivalent embodiments of the transfer apparatus and relevant method, having the features set forth in the claims, and thus all falling within the scope of protection defined by them.

## Claims

1. Oil refill container (1), which can be coupled to a coolant refill station in an air conditioning system for motor vehicles, said container (1) comprising:
• an oil containment body (2) for the containment of oil adapted to be mixed with the coolant circulating in said air conditioning system, and
• a closing cap (3) to which quick coupling means (5) axially arranged are associated, said quick coupling means (5) being adapted to be connected to said refill station said closing cap (3) comprising a cover (31) and an under-cap (4);
• oil suction means (12) that are associated with the cover (31) and in fluid communication with the quick coupling means (5),
**characterized in that** it comprises one or more valves (6) arranged in the outer cover portion of said closing cap (3), said valves (6) being configured to open by pressure difference and let air in to release oil, said under-cap (4) being shaped in such a way to delimit, with said cover (31), a compartment (7) suitable for containing at least an amount of a drying substance when it is coupled with said cover (31), the air passing through said compartment (7) being dehydrated by the drying substance and replacing the oil by means of passage holes (10) arranged in the under-cap (4), allowing the rising of the oil itself through the oil suction means (12).

2. Oil refill container (1) according to claim 1, comprising sealing elements created with the geometry of the under-cap (4) and placed in such a way that a tight seal is created between said cover (31), said under-cap (4) and said oil containment body (2).

3. Oil refill container (1) according to claim 2, wherein said sealing elements are plastic O-rings.

4. Oil refill container (1) according to any of the preceding claims, wherein said closing cap (3) comprises a sealing ring (11) external to the under-cap (4), said sealing ring (11) being placed between said cover (31) and said under-cap (4) and being configured to restrain the cover (31) and under-cap (4) assembly by friction with said elements.

5. Oil refill container (1), according to claim any of the preceding claims, wherein said under-cap (4) has an opening (41) adapted to house said suction means (12).

6. Oil refill container (1) according to claim any of the preceeding claims, wherein said oil suction means (12) are made in the shape of a tubular element (12a) extending axially from said cover (31) up to within said compartment (7).

7. Oil refill container (1) according to claim 6, wherein said tubular element (12a) forming said oil suction means (12) is coaxial and in fluid communication with a tubular connector (51) comprised in said quick coupling means (5).

8. Oil refill container (1) according to any of the preceding claims, wherein said quick coupling means (5) are provided with a sealed check valve which preserves the oil within said oil containment body (2), said sealed check valve being configured to open only when said oil containment body (2) is connected to the system to be filled.

9. Oil refill container (1) according to any of the preceding claims, wherein said under-cap (4) is directly associable to the cover (31) and said cover (31) is directly screwable on a corresponding thread of said oil contaiment body (2).

10. Oil refill container (1) according to any of claims 1 to 8, wherein said under-cap (4) is associable to both the oil containment body (2), by at least a first threaded portion (9), and to the cover (31) by a second threaded portion (8).

11. Oil refill container (1) according to any of the preceding claims, comprising air sealing means placed between said cover (31) and said suction means (12).

## Patentansprüche

1. Zuführungsbehältnis für Öl (1), das mit einer Kühlmittelnachfüllstation in einer Klimaanlage für Motorfahrzeuge gekuppelt werden kann, wobei das Behältnis (1) umfasst:
• einen Ölbehälterkörper (2) zum Enthalten von Öl, das ausgelegt ist, um mit dem Kühlmittel vermischt zu werden, das in der Klimaanlage zirkuliert, und
• eine Verschlusskappe (3), mit der Schnellkupplungsmittel (5) axial angeordnet assoziiert sind, wobei die Schnellkupplungsmittel (5) ausgelegt sind, um mit der Nachfüllstation verbunden zu werden, wobei die Verschlusskappe (3) eine Abdeckung (31) und eine Unterkappe (4) umfasst;
• Ölansaugmittel (12), die mit der Abdeckung (31) verbunden und in Fluidkommunikation mit den Schnellkupplungsmitteln (5) sind,
**dadurch gekennzeichnet, dass** es ein oder mehrere Ventile (6) umfasst, die in dem äußeren Abdeckungsabschnitt der Verschlusskappe (3) angeordnet sind, wobei die Ventile (6) konfiguriert sind, um sich durch Druckdifferenz zu öffnen und Luft einzulassen, um Öl abzulassen, wobei die Unterkappe (4) so ausgebildet ist, dass sie mit der Abdeckung (31) eine Unterteilung (7) begrenzt, geeignet, um mindestens eine Menge einer Trocknungssubstanz zu enthalten, wenn sie mit der Abdeckung (31) gekuppelt ist, wobei die Luft, die durch die Unterteilung (7) strömt, durch die Trocknungssubstanz getrocknet wird und das Öl mittels Durchgangslöchern (10) ersetzt, die in der Unterkappe (4) angeordnet sind, wodurch der Anstieg des Öls durch die Ölansaugmittel (12) ermöglicht wird.

2. Zuführungsbehältnis für Öl (1) nach Anspruch 1, umfassend Dichtungsmittel, die mit der Geometrie der Unterkappe (4) geschaffen und so platziert sind, dass eine dichte Abdichtung zwischen der Abdeckung (31), der Unterkappe (4) und dem Ölbehälterkörper (2) geschaffen wird.

3. Zuführungsbehältnis für Öl (1) nach Anspruch 2, wobei die Dichtungselemente O-Ringe aus Kunststoff sind.

4. Zuführungsbehältnis für Öl (1) nach einem der vorhergehenden Ansprüche, wobei die Verschließkappe (3) einen Dichtungsring (11) umfasst, der außenseitig zur Unterkappe (4) angeordnet ist, wobei der Dichtungsring (11) zwischen der Abdeckung (31) und der Unterkappe (4) platziert und konfiguriert ist, um die Anordnung der Abdeckung (31) und der Unterkappe (4) durch Reibung mit den Elementen festzuspannen.

5. Zuführungsbehältnis für Öl (1) nach einem der vorhergehenden Ansprüche, wobei die Unterkappe (4) eine Öffnung (41) besitzt, die ausgelegt ist, um die Ansaugmittel (12) unterzubringen.

6. Zuführungsbehältnis für Öl (1) nach einem der vorhergehenden Ansprüche, wobei die Ölansaugmittel (12) in der Form eines Rohrelements (12a) ausgebildet sind, sich axial von der Abdeckung (31) bis in die Unterteilung (7) erstreckend.

7. Zuführungsbehältnis für Öl (1) nach Anspruch 6, wobei das Rohrelement (12a), das die Ölansaugmittel (12) formt, koaxial und in Fluidkommunikation mit einem rohrförmigen Verbinder (51) angeordnet ist, enthalten in den Schnellkupplungsmitteln (5).

8. Zuführungsbehältnis für Öl (1) nach einem der vorhergehenden Ansprüche, wobei die Schnellkupplungsmittel (5) mit einem abgedichteten Rückschlagventil ausgestattet sind, das das Öl im Ölbehälterkörper (2) behält, wobei das abgedichtete Rückschlagventil konfiguriert ist, um sich nur dann zu öffnen, wenn der Ölbehälterkörper (2) mit dem zu füllenden System verbunden ist.

9. Zuführungsbehältnis für Öl (1) nach einem der vorhergehenden Ansprüche, wobei die Unterkappe (4) direkt mit der Abdeckung (31) assoziiert werden kann und die Abdeckung (31) direkt auf einem entsprechenden Gewinde des Ölbehälterkörpers (2) aufgeschraubt werden kann.

10. Zuführungsbehältnis für Öl (1) nach einem der Ansprüche 1 bis 8, wobei die Unterkappe (4) sowohl mit dem Ölbehälterkörper (2) durch mindestens einen ersten Gewindeabschnitt (9) als auch mit der Abdeckung (31) durch einen zweiten Gewindeabschnitt (8) assoziierbar ist.

11. Zuführungsbehältnis für Öl (1) nach einem der vorhergehenden Ansprüche, umfassend Luftabdichtungsmittel, die zwischen der Abdeckung (31) und den Ansaugmitteln (12) platziert sind.

## Revendications

1. Récipient de distribution de lubrifiant (1) pouvant être couplé à un poste de distribution de fluide caloporteur dans un système de climatisation pour véhicules motorisés, ledit récipient (1) comprenant :
• un corps de contenance (2) de lubrifiant pour la contenance du lubrifiant adapté à être mélangé au fluide caloporteur circulant dans le système de climatisation, et
• un bouchon de fermeture (3) auquel des moyens d'accouplement rapide (5) disposés axialement sont associés, lesdits moyens d'accouplement rapide (5) étant adaptés pour être reliés au dit poste de distribution, ledit bouchon de fermeture (3) comprenant un couvercle (31) et un sous-bouchon (4) ;
• des moyens d'aspiration (12) de lubrifiant étant associés au couvercle (31) et en communication fluidique avec les moyens d'accouplement rapide (5),
**caractérisé en ce qu'**il comprend une ou plusieurs vannes (6) disposées dans la partie de couvercle extérieure dudit bouchon de fermeture (3), lesdites vannes (6) étant configurées pour s'ouvrir par différence de pression et laisser entrer l'air pour libérer le lubrifiant, ledit sous-bouchon (4) ayant une forme qui permet de limiter, avec ledit couvercle (31), un compartiment (7) pouvant contenir au moins une quantité de substance siccative lorsqu'il est couplé au dit couvercle (31), l'air passant à travers ledit compartiment (7) étant déshydraté par la substance siccative et remplaçant le lubrifiant par l'intermédiaire de trous de passage (10) disposés dans le sous-bouchon (4), permettant la remontée du lubrifiant lui-même à travers les moyens d'aspiration (12) de lubrifiant.

2. Récipient de distribution de lubrifiant (1) selon la revendication 1, comprenant des éléments d'étanchéité créés avec la forme du sous-bouchon (4) et placés de manière à ce qu'une forte étanchéité soit créée entre ledit couvercle (31), ledit sous-bouchon (4) et ledit corps de contenance (2) de lubrifiant.

3. Récipient de distribution de lubrifiant (1) selon la revendication 2, dans lequel les éléments d'étanchéité sont des joints toriques en plastique.

4. Récipient de distribution de lubrifiant (1) selon l'une quelconque des revendications précédentes, dans lequel ledit bouchon de fermeture (3) comprend une bague d'étanchéité (11) externe au sous-bouchon (4), ladite bague d'étanchéité (11) étant placée entre ledit couvercle (31) et ledit sous-bouchon (4) et étant configurée pour retenir l'assemblage du couvercle (31) et du sous-bouchon (4) par friction avec lesdits éléments.

5. Récipient de distribution de lubrifiant (1), selon l'une quelconque des revendications précédentes, dans lequel ledit sous-bouchon (4) comporte une ouverture (41) adaptée pour loger lesdits moyens d'aspiration (12) .

6. Récipient de distribution de lubrifiant (1) selon l'une quelconque des revendications précédentes, dans lequel lesdits moyens d'aspiration (12) de lubrifiant sont réalisés selon la forme d'un élément tubulaire (12a) se prolongeant axialement dudit couvercle (31) jusqu'à l'intérieur dudit compartiment (7).

7. Récipient de distribution de lubrifiant (1) selon la revendication 6, dans lequel ledit élément tubulaire (12a), formant lesdits moyens d'aspiration (12) de lubrifiant, est coaxial et en communication fluidique avec un connecteur tubulaire (51) compris dans lesdits moyens d'accouplement rapide (5).

8. Récipient de distribution de lubrifiant (1) selon l'une quelconque des revendications précédentes, dans lequel lesdits moyens d'accouplement rapide (5) sont pourvus d'un clapet antiretour étanche qui conserve le lubrifiant à l'intérieur dudit corps de contenance (2) de lubrifiant, ledit clapet antiretour étanche étant configuré pour ne s'ouvrir que lorsque ledit corps de contenance (2) de lubrifiant est relié au système à remplir.

9. Récipient de distribution de lubrifiant (1) selon l'une quelconque des revendications précédentes, dans lequel ledit sous-bouchon (4) peut directement s'associer au couvercle (31) et ledit couvercle (31) peut directement se visser sur un filetage correspondant dudit corps de contenance (2) de lubrifiant.

10. Récipient de distribution de lubrifiant (1) selon l'une quelconque des revendications de 1 à 8, dans lequel ledit sous-bouchon (4) peut s'associer à la fois au corps de contenance (2) de lubrifiant, par au moins une première partie filetée (9), et au couvercle (31) par une seconde partie filetée (8).

11. Récipient de distribution de lubrifiant (1), selon l'une quelconque des revendications précédentes, comprenant des moyens étanches à l'air placés entre ledit couvercle (31) et lesdits moyens d'aspiration (12) .
